# EUROPEAN PATENT APPLICATION

(11) **EP 4 611 358 A1**
(43) Date of publication of application: **03.09.2025**
(21) Application number: 23882540.0
(22) Date of filing: 20.10.2023
(51) Int. Cl.: H04N 7/18, A01B 69/00, B60R 1/20, B60R 1/24, B60R 1/25, B60R 1/26, B60R 1/28

(54) **AGRICULTURAL WORK VEHICLE AND CONTROL SYSTEM**

(30) Priority: 24.10.2022 JP 2022170063
(71) Applicant: Kubota Corporation, Osaka 556-8601 (JP)
(72) Inventor: FUJII Takafumi, Amagasaki-shi, Hyogo 661-0967 (JP); IKEGAMI Takanori, Amagasaki-shi, Hyogo 661-0967 (JP)
(74) Representative: Cabinet Beau de Loménie
(86) International application number: PCT/JP2023/037957
(87) International publication number: WO 2024/090335

(57) **Abstract**

There has been a demand for (i) an agricultural work vehicle easily operable by an operator from a remote place on the basis of the driver's line of sight and (ii) a control system that allows an operator to easily operate an agricultural work vehicle from a remote place on the basis of the driver's line of sight. An agricultural work vehicle includes: a body 1 with at least one front wheel 5; a plurality of cameras 19, 20, 21, 22, 23, and 24; and a communication device configured to transmit to a remote device an image captured by at least one of the plurality of cameras 19, 20, 21, 22, 23, and 24. The plurality of cameras 19, 20, 21, 22, 23, and 24 include at least one first camera rearward of an axle X1 of the at least one front wheel 5. The communication device is configured to transmit to the remote device a first image captured by the at least one first camera.

## Description

### Technical Field

The present invention relates to an agricultural work vehicle and a control system.

### Background Art

Patent Literature 1 discloses as conventional art a work vehicle including a camera ("imaging camera (8)" in the document) disposed at a front end portion of the vehicle body and configured to capture images to be transmitted to an external device.

### Citation List

### Patent Literature

Patent Literature 1: Japanese Unexamined Patent Application Publication, Tokukai, No. 2018-185672

### Summary of Invention

### Technical Problem

Known art allows an operator to operate from a remote place an agricultural work vehicle in an agricultural field on the basis of an image captured by a camera on the agricultural work vehicle. With the above technique of Patent Literature 1 used for such an agricultural work vehicle, the camera will be far away from the driver's line of sight (that is, at a front end portion of the vehicle body). This renders it difficult for the operator to operate the agricultural work vehicle from a remote place on the basis of the driver's line of sight.

The above circumstances have led to a demand for (i) an agricultural work vehicle easily operable by an operator from a remote place on the basis of the driver's line of sight and (ii) a control system that allows an operator to easily operate an agricultural work vehicle from a remote place on the basis of the driver's line of sight.

### Solution to Problem

The present invention characteristically includes:
a body with at least one front wheel;
a plurality of cameras; and
a communication device configured to transmit to a remote device an image captured by at least one of the plurality of cameras;
the plurality of cameras including at least one first camera rearward of an axle of the at least one front wheel,
the communication device being configured to transmit to the remote device a first image captured by the at least one first camera.

With the above characteristic configuration, the cameras include a first camera rearward of the axle of the front wheel which first camera captures images near the driver's line of sight. The communication device transmits the images to the remote device. The agricultural work vehicle is therefore easily operable by an operator from a remote place on the basis of the driver's line of sight.

The present invention may preferably be configured such that
the plurality of cameras include a front camera configured to capture an image of a view forward of the body.

With the above characteristic configuration, the front camera captures images that allow the operator to appropriately see a view forward of the body from a remote place.

The present invention may preferably be configured such that
the at least one front wheel includes a pair of left and right front wheels, and the front camera is configured to capture an image of the left and right front wheels.

With the above characteristic configuration, the front camera captures images that allow the operator to appropriately recognize the rotation of the left and right front wheels and the surroundings thereof from a remote place.

The present invention may preferably further include:
a hood at a front portion of the body,
wherein the front camera is configured to capture an image of the hood.

With the above characteristic configuration, the front camera captures images that allow the operator to appropriately recognize the surroundings of the hood from a remote place.

The present invention may preferably be configured such that
the plurality of cameras include a side camera configured to capture an image of a view lateral to the body.

With the above characteristic configuration, the side camera captures images that allow the operator to appropriately see a view lateral to the body from a remote place.

The present invention may preferably further include:
a cabin including:
   a front pillar; and
   a rear pillar,
wherein the front camera and the side camera are between the front pillar and the rear pillar in a front-rear direction relative to the body.

The above characteristic configuration allows the front and side cameras to be easily positioned near the driver's line of sight.

The present invention may preferably further include:
a driver's seat,
wherein the front camera is above the driver's seat and is movable in at least one of a vertical direction relative to the body, a lateral direction relative to the body, and a front-rear direction relative to the body.

With the above characteristic configuration, moving the front camera in at least one of the vertical, lateral, and front-rear directions relative to the body prevents the front camera from obstructing the driver on the driver's seat. The above characteristic configuration also allows the front camera to have an adjustable imaging range.

The present invention may preferably further include:
a driver's seat,
wherein the front camera and the side camera are above the driver's seat and are movable in at least one of a vertical direction relative to the body, a lateral direction relative to the body, and a front-rear direction relative to the body.

With the above characteristic configuration, moving the front and side cameras in at least one of the vertical, lateral, and front-rear directions relative to the body prevents the front and side cameras from obstructing the driver on the driver's seat. The above characteristic configuration also allows the front and side cameras to each have an adjustable imaging range.

The present invention may preferably further include:
a driver's seat,
wherein the front camera is within a width of the driver's seat in a lateral direction relative to the body and is forward of a rear end of the driver's seat.

The above characteristic configuration allows the front camera to be easily positioned near the driver's line of sight.

The present invention may preferably be configured such that
the plurality of cameras include a rear camera configured to capture an image of a view rearward of the body.

With the above characteristic configuration, the rear camera captures images that allow the operator to appropriately see a view rearward of the body from a remote place.

The present invention may preferably be configured such that
the plurality of cameras include an outer camera lateral to the body and facing rearward relative to the body.

With the above characteristic configuration, the outer camera captures images that allow the operator to appropriately see from a remote place a view rearward of the body from a position lateral to the body.

The present invention may preferably further include:
a mirror having a reflective surface within an imaging range of at least one of the plurality of cameras.

The above characteristic configuration allows at least one of the cameras to capture images of the reflective surface of the mirror. The images allow the operator to indirectly see the reflective surface of the mirror from a remote place.

The present invention may preferably be configured such that
the front camera, the side camera, and the rear camera each have an imaging direction changeable in response to a remote operation.

The above characteristic configuration allows the operator to change the respective imaging directions of the front, side, and rear cameras from a remote place.

The present invention may preferably further include:
a cabin
containing at least one of the plurality of cameras.

The above characteristic configuration allows the cabin to protect at least one of the cameras.

The present invention may preferably be configured such that
the remote device is for use to operate the body.

The above characteristic configuration allows the operator to operate the body from a remote place.

The present invention may preferably further include:
the agricultural work vehicle,
wherein the remote device includes a display device configured to display the first image captured by the at least one first camera rearward of the axle of the at least one front wheel.

The above characteristic configuration allows the display device to display images captured by a camera among the cameras which camera is rearward of the axle of the front wheel. The control system therefore allows an operator to easily operate an agricultural work vehicle from a remote place on the basis of the driver's line of sight.

The present invention may preferably be configured such that
the communication device is configured to transmit to the remote device respective images captured by the front camera, the side camera, the rear camera, and the outer camera, and
the display device is configured to display the respective images.

The above characteristic configuration allows the display device to display respective images captured by the front, side, rear, and outer cameras. This allows the operator to appropriately see from a remote place a view forward of the body, a view lateral to the body, a view rearward of the body, and a view rearward of the body from a position lateral to the body.

The present invention may preferably be configured such that
the remote device includes a control device configured to switch an image among the respective images which image is being displayed on the display device to a different image among the respective images which different image is being displayed on the display device.

The above characteristic configuration makes it possible to change the arrangement as appropriate of respective images captured by the front, side, rear, and outer cameras.

The present invention may preferably be configured such that
the display device is configured to display an image captured by the outer camera over an image captured by the front camera.

The above characteristic configuration makes it possible to effectively use that section of the display device which is for use to display images (that is, the screen).

### Brief Description of Drawings

Fig. 1 is a left side view of a tractor.
Fig. 2 is a plan view of a tractor.
Fig. 3 is a left side view of a front camera, a left camera, a right camera, and a rear camera, illustrating how the cameras are positioned.
Fig. 4 is a diagram illustrating a control system for driverless travel of a tractor.
Fig. 5 is a diagram illustrating images displayed on a display device.
Fig. 6 is a left side view of a structure for holding a front camera, a left camera, and a right camera for a first alternative embodiment.
Fig. 7 is a left side view of a structure for holding a front camera, a left camera, and a right camera for a second alternative embodiment.
Fig. 8 is a front view of a structure for holding a front camera, a left camera, and a right camera for a third alternative embodiment.
Fig. 9 is a plan view of a structure for holding a front camera, a left camera, and a right camera for a fourth alternative embodiment.
Fig. 10 is a left side view of a mirror for an alternatively embodiment.

### Description of Embodiments

The description below deals with an embodiment of the present invention with reference to drawings. In the description below, arrow F indicates the forward direction relative to the body, arrow B indicates the backward direction relative to the body, arrow L indicates the leftward direction relative to the body, arrow R indicates the rightward direction relative to the body, arrow U indicates the upward direction relative to the body, and arrow D indicates the downward direction relative to the body.

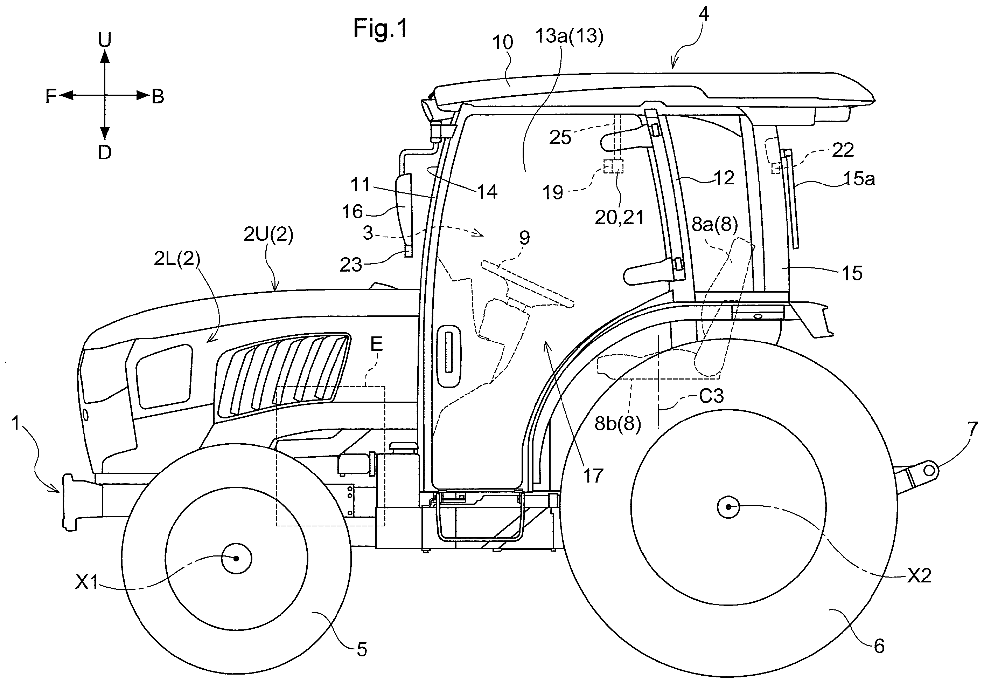

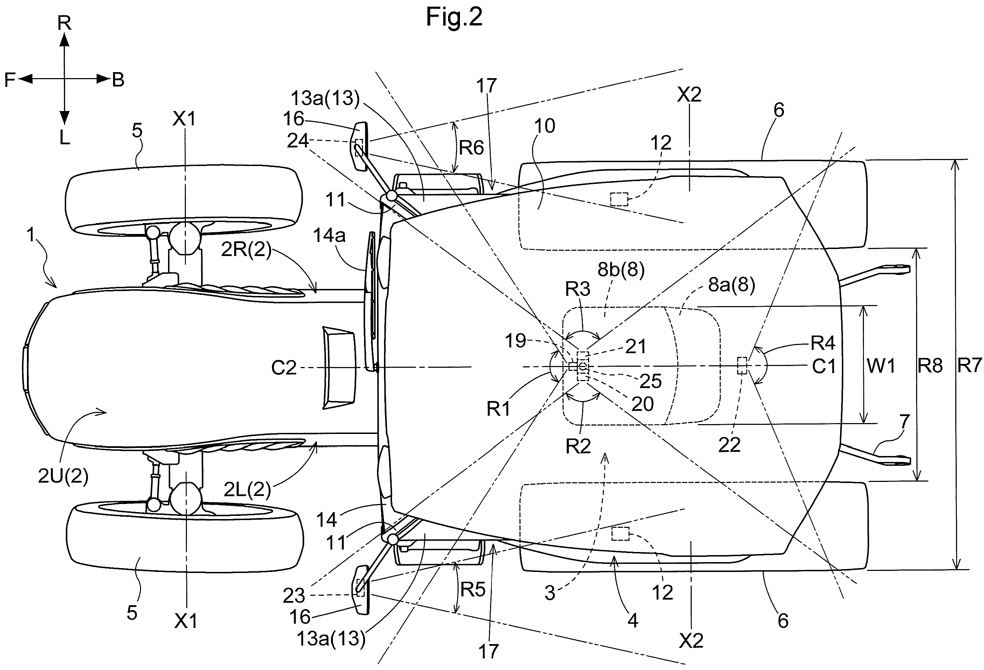

Figs. 1 and 2 each illustrate a tractor (which is an example of the "agricultural work vehicle" according to the present invention) including a body 1, a hood 2, an engine E, a driver section 3, and a cabin 4.

The body 1 is provided with a pair of left and right front wheels 5 and a pair of left and right rear wheels 6. The front wheels 5 are rotatable about a rotation axis X1 extending laterally relative to the body. The rear wheels 6 are rotatable about a rotation axis X2 extending laterally relative to the body. The body 1 has a rear portion provided with a lifting/lowering link mechanism 7 to which a work device (such as a tiller device) is attachable.

The hood 2 is at a front portion of the body 1 and forward of the cabin 4. The hood 2 has at least two side faces 2L and 2R and an upper face 2U connecting respective upper portions of the side faces 2L and 2R. The engine E is in the hood 2.

The driver section 3 is at a rear portion of the body 1, and includes a driver's seat 8 for a driver to sit on and a steering wheel 9 for use to steer the body 1. The driver's seat 8 is between the left and right rear wheels 6, and has a lateral center C1 coinciding (or substantially coinciding) with the lateral center C2 of the body 1.

The cabin 4 defines a space for a driver; that is, it covers the driver section 3. The cabin 4 includes a roof 10, a pair of left and right front pillars 11, a pair of left and right rear pillars 12, a pair of left and right doors 13, a front glass screen 14, a rear glass screen 15, and a pair of left and right rear-view mirrors 16 (which is an example of the "mirror" for the present invention).

The roof 10 is supported by the front pillars 11 and the rear pillars 12. Specifically, the front pillars 11 are at a front portion of the cabin 4, and support a front portion of the roof 10, whereas the rear pillars 12 are at a rear portion of the cabin 4, and support a rear portion of the roof 10. Each front pillar 11 and its corresponding rear pillar 12 form therebetween an entrance 17 for a driver to enter and exit the driver section 3. The doors 13 each extend from the corresponding front pillar 11 to the corresponding rear pillar 12, and are each held by the corresponding rear pillar 12 in such a manner as to be swingable about a rear axis to be opened and closed. The doors 13 each include a glass section 13a.

The front glass screen 14 extends from the left front pillar 11 to the right front pillar 11, and is provided with a front wiper 14a. The rear glass screen 15 is at a rear face portion of the cabin 4, and is provided with a rear wiper 15a. The rear-view mirrors 16 are each configured to form an image of a view rearward of the body 1 and laterally outward thereof. The rear-view mirrors 16 are held by the respective front pillars 11.

The tractor includes a positioning module (not illustrated in the drawings) configured to receive GPS (Global Positioning System) signals from artificial satellites to determine the position of the tractor. The satellite positioning module may use, instead of the GPS, another global navigation satellite system such as GLONASS, Galileo, QZSS, or BeiDou.

The tractor is capable of human-operated travel and driverless travel. The former involves a driver in the driver section 3, whereas the latter does not, with an operator remotely operating the tractor in an agricultural field. A later description will deal with the remote operation of the tractor in detail.

The tractor is provided with two or more cameras each configured to capture images of a view outward of the body 1. The cameras include a front camera 19 (which is an example of the "cameras" for the present invention), a left camera 20 (which is an example of the "cameras" and "side camera" for the present invention), a right camera 21 (which is an example of the "cameras" and "side camera" for the present invention), a rear camera 22 (which is an example of the "cameras" for the present invention), a left outer camera 23 (which is an example of the "cameras" and "outer camera" for the present invention), and a right outer camera 24 (which is an example of the "cameras" and "outer camera" for the present invention).

The front camera 19 is configured to capture images of a view forward of the body 1. The left camera 20 is configured to capture images of a view to the left of the body 1. The right camera 21 is configured to capture images of a view to the right of the body 1. The rear camera 22 is configured to capture images of a view rearward of the body 1.

The left outer camera 23 is to the left of the body 1 and faces rearward relative to the body 1. The left outer camera 23 is configured to capture images of a view rearward of the body 1 and to the left thereof. The left outer camera 23 is held by a lower portion of the left rear-view mirror 16.

The right outer camera 24 is to the right of the body 1 and faces rearward relative to the body 1. The right outer camera 24 is configured to capture images of a view rearward of the body 1 and to the right thereof. The right outer camera 24 is held by a lower portion of the right rear-view mirror 16.

Fig. 2 shows R1 to indicate the imaging range of the front camera 19, R2 to indicate the imaging range of the left camera 20, R3 to indicate the imaging range of the right camera 21, R4 to indicate the imaging range of the rear camera 22, R5 to indicate the imaging range of the left outer camera 23, and R6 to indicate the imaging range of the right outer camera 24. The imaging range R2 of the left camera 20 is as wide (or substantially as wide) as the imaging range R3 of the right camera 21. The imaging range R5 of the left outer camera 23 is as wide (or substantially as wide) as the imaging range R6 of the right outer camera 24.

The imaging range R1 of the front camera 19 covers the left and right front wheels 5, the hood 2, the left and right front pillars 11, and the left and right rear-view mirrors 16. The rear-view mirrors 16 each have a reflective surface within the imaging range R1 of the front camera 19.

The imaging range R2 of the left camera 20 covers the left front pillar 11, the left rear pillar 12, the left door 13, the left entrance 17, and the left rear-view mirror 16. The left rear-view mirror 16 has a reflective surface within the imaging range R2 of the left camera 20.

The imaging range R3 of the right camera 21 covers the right front pillar 11, the right rear pillar 12, the right door 13, the right entrance 17, and the right rear-view mirror 16. The right rear-view mirror 16 has a reflective surface within the imaging range R3 of the right camera 21.

The rear-view mirrors 16 each have a reflective surface within the imaging range of at least one of the cameras (namely, the front camera 19, the left camera 20, the right camera 21, the rear camera 22, the left outer camera 23, and the right outer camera 24). The present invention is not limited to the present embodiment in this regard.

The imaging range R4 of the rear camera 22 covers the left and right rear wheels 6 and the lifting/lowering link mechanism 7. The imaging range R5 of the left outer camera 23 covers the left rear pillar 12, the left door 13, the left entrance 17, and the left rear wheel 6. The imaging range R6 of the right outer camera 24 covers the right rear pillar 12, the right door 13, the right entrance 17, and the right rear wheel 6.

The respective imaging ranges R1 to R6 of the front camera 19, the left camera 20, the right camera 21, the rear camera 22, the left outer camera 23, and the right outer camera 24 are illustrated in Fig. 2 only in a schematic manner, and are not limited to those in Fig. 2.

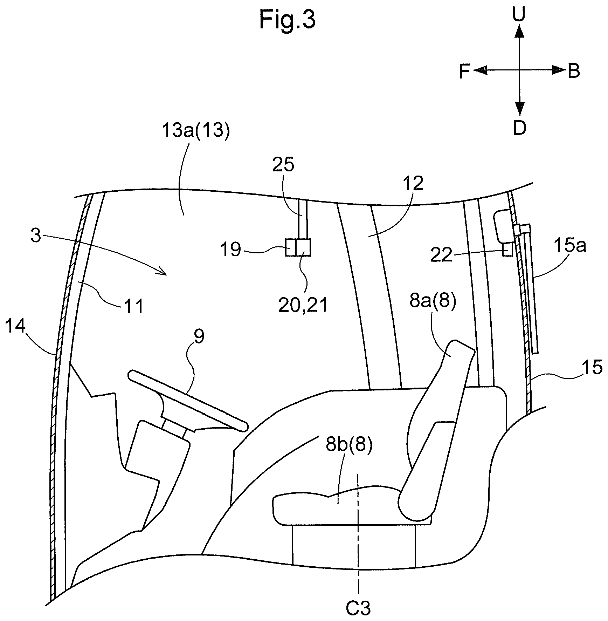

As illustrated in Figs. 1 to 3, the cabin 4 contains the front camera 19, the left camera 20, the right camera 21, and the rear camera 22. The front camera 19 captures images of a view forward of the body 1 from inside the cabin 4 through the front glass screen 14. The left camera 20 captures images of a view to the left of the body 1 from inside the cabin 4 through the left door 13 (that is, its glass section 13a). The right camera 21 captures images of a view to the right of the body 1 from inside the cabin 4 through the right door 13 (that is, its glass section 13a). The rear camera 22 captures images of a view rearward of the body 1 from inside the cabin 4 through the rear glass screen 15.

The cabin 4 contains at least one of the cameras (namely, the front camera 19, the left camera 20, the right camera 21, the rear camera 22, the left outer camera 23, and the right outer camera 24). The present invention is not limited to the present embodiment in this regard.

The front camera 19, the left camera 20, the right camera 21, the rear camera 22, the left outer camera 23, and the right outer camera 24 are rearward of the rotation axis X1 (which is an example of the "axle" for the present invention) of the front wheels 5. The front camera 19, the left camera 20, the right camera 21, the left outer camera 23, and the right outer camera 24 are forward of the rotation axis X2 of the rear wheels 6. The rear camera 22 is rearward of the rotation axis X2 of the rear wheels 6. The front camera 19, the left camera 20, the right camera 21, and the rear camera 22 are within a range R7 between the laterally outer end of the left rear wheel 6 (that is, its left end) and the laterally outer end of the right rear wheel 6 (that is, its right end) in a lateral direction relative to the body and within a range R8 between the laterally inner end of the left rear wheel 6 (that is, its right end) and the laterally inner end of the right rear wheel 6 (that is, its left end) in the direction lateral relative to the body.

At least one of the cameras (namely, the front camera 19, the left camera 20, the right camera 21, the rear camera 22, the left outer camera 23, and the right outer camera 24) is rearward of the rotation axis X1 of the front wheels 5. The present invention is not limited to the present embodiment in this regard.

The tractor includes a support frame 25 supporting the front camera 19, the left camera 20, and the right camera 21 and suspended from the roof 10. The front camera 19, the left camera 20, and the right camera 21 are attached to the roof 10 with the support frame 25 in-between.

The front camera 19, the left camera 20, and the right camera 21 are between the front pillars 11 and the rear pillars 12 in the front-rear direction relative to the body and above the driver's seat 8. Specifically, the front camera 19, the left camera 20, and the right camera 21 are upward of a front end portion of the seating section 8b of the driver's seat 8, that is, forward of the front-rear center C3 of the seating section 8b of the driver's seat 8.

The front camera 19, the left camera 20, and the right camera 21 are within the width W1 of the driver's seat 8 in the lateral direction relative to the body and forward of the rear end of the driver's seat 8 (for the present embodiment, of its backrest 8a). The front camera 19 is at the lateral center C1 of the driver's seat 8, whereas the left camera 20 and the right camera 21 are disposed symmetrically with respect to the lateral center C1 of the driver's seat 8.

The front camera 19, the left camera 20, and the right camera 21 are above the seating section 8b of the driver's seat 8, above the backrest 8a of the driver's seat 8, and forward of the head of the driver on the driver's seat 8.

The rear camera 22 is within the width W1 of the driver's seat 8 in the lateral direction relative to the body and rearward of the backrest 8a of the driver's seat 8. The rear camera 22 is at the lateral center C1 of the driver's seat 8, above the seating section 8b of the driver's seat 8, and above the backrest 8a of the driver's seat 8. The rear camera 22 is near the base of the rear wiper 15a, and held by the base of the rear wiper 15a.

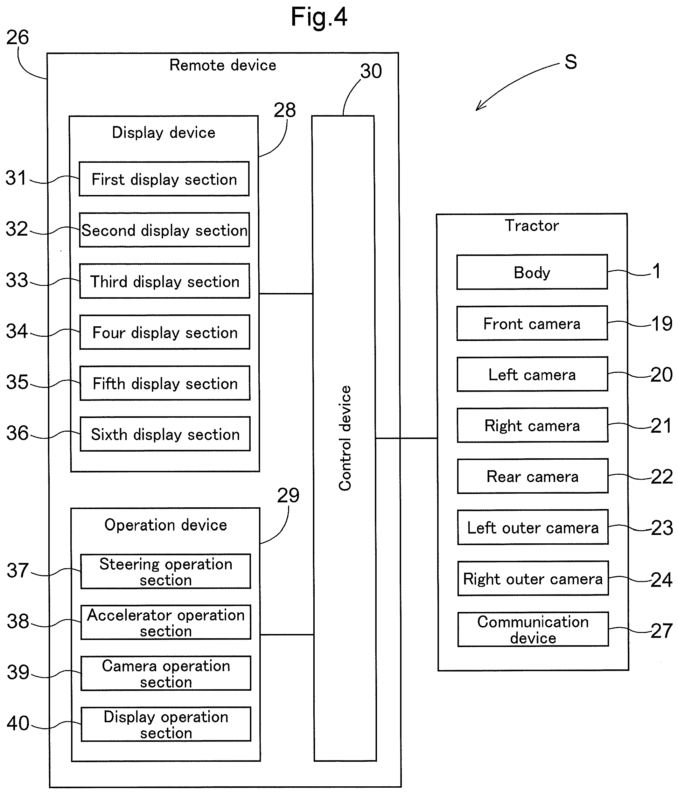

Fig. 4 illustrates a control system S for driverless travel of the tractor. The control system S includes a remote device 26 in addition to the tractor, which includes a communication device 27 in addition to the front camera 19, the left camera 20, the right camera 21, the rear camera 22, the left outer camera 23, and the right outer camera 24.

The communication device 27 is configured to communicate with the remote device 26. Specifically, the communication device 27 is configured to transmit to the remote device 26 wirelessly (for example, over the internet) images captured by the front camera 19, the left camera 20, the right camera 21, the rear camera 22, the left outer camera 23, and the right outer camera 24.

The communication device 27 is configured to transmit to the remote device 26 images captured by at least one of the cameras (namely, the front camera 19, the left camera 20, the right camera 21, the rear camera 22, the left outer camera 23, and the right outer camera 24). The present invention is not limited to the present embodiment in this regard. The communication device 27 is preferably configured to transmit to the remote device 26 images captured by that least one of the cameras (namely, the front camera 19, the left camera 20, the right camera 21, the rear camera 22, the left outer camera 23, and the right outer camera 24) which is rearward of the rotation axis X1 of the front wheels 5.

The remote device 26 is for use to remotely operate the tractor, and is for use to operate the body 1 for the present embodiment. The remote device 26 is at a place remote from the tractor in an agricultural field, and includes a display device 28, an operation device 29, and a control device 30.

The display device 28 is configured to display images captured by the cameras, namely the front camera 19, the left camera 20, the right camera 21, the rear camera 22, the left outer camera 23, and the right outer camera 24. The display device 28 is preferably configured to display images captured by that least one of the cameras (namely, the front camera 19, the left camera 20, the right camera 21, the rear camera 22, the left outer camera 23, and the right outer camera 24) which is rearward of the rotation axis X1 of the front wheels 5. The display device 28 includes a first display section 31, a second display section 32, a third display section 33, a fourth display section 34, a fifth display section 35, and a sixth display section 36.

The operation device 29 includes a steering operation section 37, an accelerator operation section 38, a camera operation section 39, and a display operation section 40. The steering operation section 37 is for use to steer the tractor. The accelerator operation section 38 is for use to accelerate the tractor.

The control device 30 is configured to control the tractor and the display device 28. The control device 30 is configured to, in response to the operator operating the steering operation section 37, change how the tractor is steered and, in response to the operator operating the accelerator operation section 38, change how the tractor is accelerated.

The camera operation section 39 is for use to change the respective imaging directions (that is, the respective imaging angles) of the front camera 19, the left camera 20, the right camera 21, the rear camera 22, the left outer camera 23, and the right outer camera 24. The control device 30 is configured to, in response to the operator operating the camera operation section 39, change the respective imaging directions of the front camera 19, the left camera 20, the right camera 21, the rear camera 22, the left outer camera 23, and the right outer camera 24. In other words, the front camera 19, the left camera 20, the right camera 21, the rear camera 22, the left outer camera 23, and the right outer camera 24 each have an imaging direction changeable in response to a remote operation.

The display operation section 40 is for use to switch respective images captured by the front camera 19 and the rear camera 22 which images are being displayed on the display device 28. The control device 30 is configured to, in response to the operator operating the display operation section 40, switch respective images captured by the front camera 19 and the rear camera 22 which images are being displayed on the display device 28. The control device 30 is, in other words, capable of switching respective images captured by the front camera 19 and the rear camera 22 which images are being displayed on the display device 28. The control device 30 may, in this case, be configured to switch the respective images captured by the front camera 19 and the rear camera 22 only while the operator is holding down the display operation section 40.

The control device 30 is configured to switch one of the respective images captured by the front camera 19, the left camera 20, the right camera 21, the rear camera 22, the left outer camera 23, and the right outer camera 24 to another. The present invention is not limited to the present embodiment in this regard.

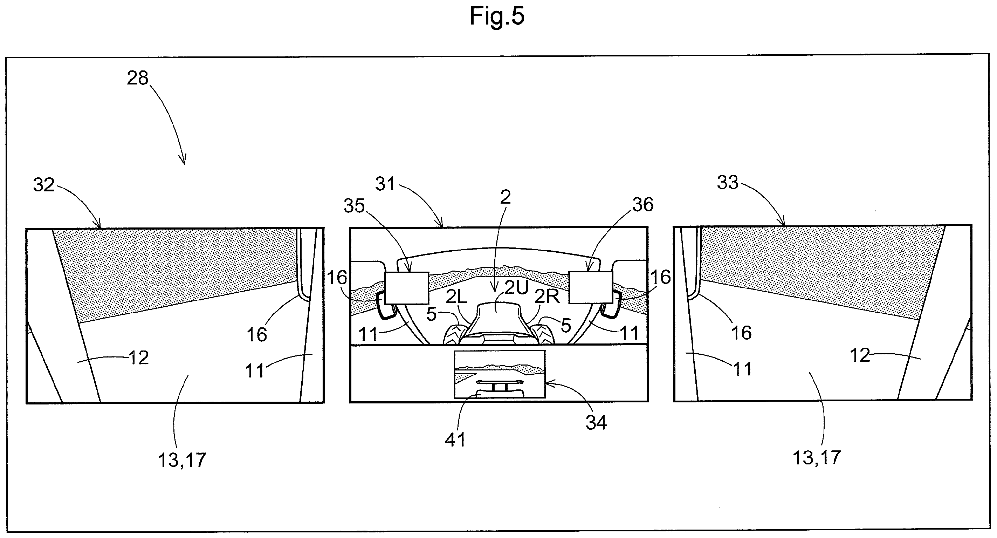

As illustrated in Fig. 5, the first display section 31 is between the second display section 32 and the third display section 33. The first display section 31 is displaying an image captured by the front camera 19 which image shows the left and right front wheels 5, the hood 2, the left and right front pillars 11, and the respective reflective surfaces of the left and right rear-view mirrors 16. In other words, the front camera 19 is configured to capture images of the left and right front wheels 5, the hood 2, the left and right front pillars 11, and the respective reflective surfaces of the left and right rear-view mirrors 16.

The front camera 19 is configured to capture images of at least a portion of the tread of the front wheels 5. The front camera 19 is also configured to capture images of at least a portion of the upper face 2U of the hood 2 and each of the side faces 2L and 2R of the hood 2, or is alternatively configured to capture images of at least a portion of the upper face 2U of the hood 2.

The second display section 32 is to the left of the first display section 31, and is displaying an image captured by the left camera 20 which image shows the left front pillar 11, the left rear pillar 12, the left door 13, the left entrance 17, and the reflective surface of the left rear-view mirror 16. In other words, the left camera 20 is configured to capture images of the left front pillar 11, the left rear pillar 12, the left door 13, the left entrance 17, and the reflective surface of the left rear-view mirror 16.

The third display section 33 is to the right of the first display section 31, and is displaying an image captured by the right camera 21 which image shows the right front pillar 11, the right rear pillar 12, the right door 13, the right entrance 17, and the reflective surface of the right rear-view mirror 16. In other words, the right camera 21 is configured to capture images of the right front pillar 11, the right rear pillar 12, the right door 13, the right entrance 17, and the reflective surface of the right rear-view mirror 16.

The fourth display section 34 is under the first display section 31, and is displaying an image captured by the rear camera 22 which image shows a work device 41 (for example, a tiller device). In other words, the rear camera 22 is configured to capture images of the work device 41, which is coupled to the lifting/lowering link mechanism 7 (see Fig. 2).

As described above, the control device 30 is configured to switch respective images captured by the front camera 19 and the rear camera 22 which images are being displayed on the display device 28. The display device 28 is configured to, in response to the operator operating the display operation section 40, display in the first display section 31 an image captured by the rear camera 22 and in the fourth display section 34 an image captured by the front camera 19.

The fifth display section 35 is over a left portion of the first display section 31, and is displaying an image captured by the left outer camera 23 which image shows, for example, the left rear pillar 12, the left door 13, the left entrance 17, the left rear wheel 6, and a left end portion of the work device 41, the image being not illustrated in Fig. 5 as being in the fifth display section 35.

The sixth display section 36 is over a right portion of the first display section 31, and is displaying an image captured by the right outer camera 24 which image shows, for example, the right rear pillar 12, the right door 13, the right entrance 17, the right rear wheel 6, and a right end portion of the work device 41, the image being not illustrated in Fig. 5 as being in the sixth display section 36.

The respective images captured by the left outer camera 23 and the right outer camera 24 are over the image captured by the front camera 19. In other words, the display device 28 is configured to display respective images captured by the left outer camera 23 and the right outer camera 24 over an image captured by the front camera 19.

The respective images captured by the left outer camera 23 and the right outer camera 24 are each over a portion of the image captured by the front camera 19 which portion has low importance (that is, which portion is unnecessary). The display device 28 for the present embodiment is configured to display (i) an image captured by the left outer camera 23 over a portion of the image captured by the front camera 19 which portion shows the left front pillar 11 and (ii) an image captured by the right outer camera 24 over a portion of the image captured by the front camera 19 which portion shows the right front pillar 11. The display device 28 is alternatively configured to display respective images captured by the left outer camera 23 and the right outer camera 24 over a portion of the image captured by the front camera 19 which portion shows the roof 10.

### Alternative Embodiments

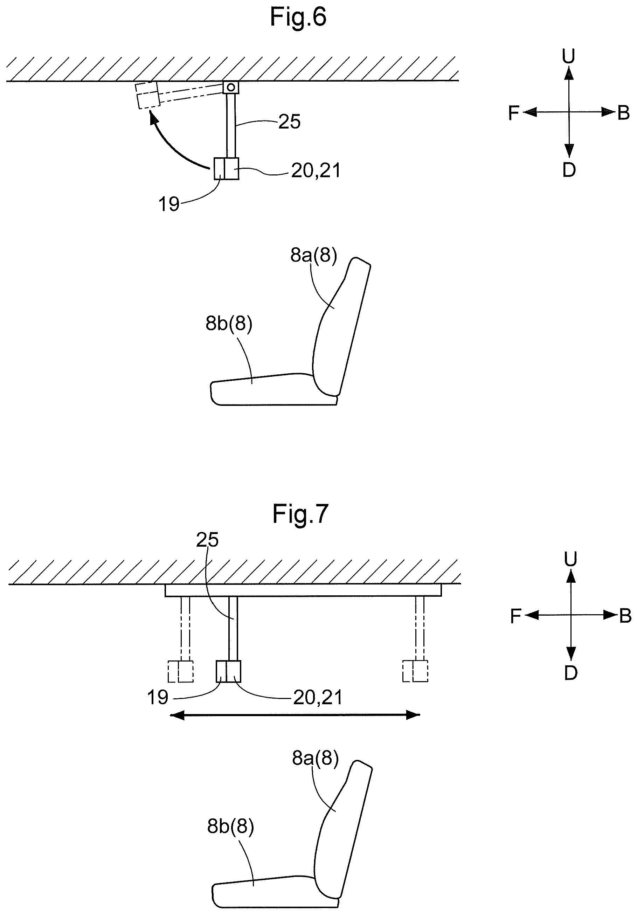

(1) The embodiment described above is not configured such that the front camera 19, the left camera 20, and the right camera 21 are moveable. The front camera 19, the left camera 20, and the right camera 21 may alternatively be movable in at least one of the vertical direction relative to the body, the lateral direction relative to the body, and the front-rear direction relative to the body (see Figs. 6 to 9).

Fig. 6 illustrates the support frame 25 as configured to be flipped upward. Flipping the support frame 25 upward moves the front camera 19, the left camera 20, and the right camera 21 upward. This prevents the front camera 19, the left camera 20, and the right camera 21 from obstructing the driver on the driver's seat 8 in the driver section 3. The support frame 25 may be flipped up through a remote operation or a manual operation (that is, as a result of the driver directly moving the support frame 25).

Fig. 7 illustrates the support frame 25 as slidable in the front-rear direction relative to the body. Sliding the support frame 25 in the front-rear direction relative to the body moves the front camera 19, the left camera 20, and the right camera 21 in the front-rear direction relative to the body. Fig. 7 illustrates the front camera 19, the left camera 20, and the right camera 21 as movable to rearward of the rear end of the driver's seat 8 (that is, of the backrest 8a). This prevents the front camera 19, the left camera 20, and the right camera 21 from obstructing the driver on the driver's seat 8 in the driver section 3. The front camera 19, the left camera 20, and the right camera 21 each have an adjustable imaging range. The support frame 25 may be slid in the front-rear direction relative to the body through a remote operation or a manual operation (that is, as a result of the driver directly moving the support frame 25). The front camera 19, the left camera 20, and the right camera 21 may be movable not to rearward of the rear end of the driver's seat 8 (that is, of the backrest 8a). The front camera 19, the left camera 20, and the right camera 21 may, in this case, be movable to, for example, rearward of the front face of the backrest 8a (that is, that face of the backrest 8a with which the back of the driver comes into contact).

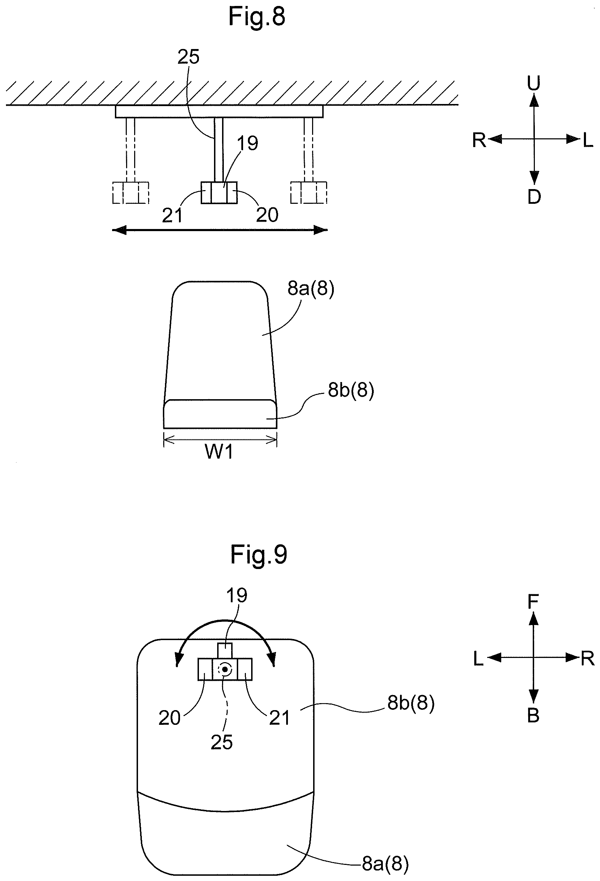

Fig. 8 illustrates the support frame 25 as slidable in the lateral direction relative to the body. Sliding the support frame 25 in the lateral direction relative to the body moves the front camera 19, the left camera 20, and the right camera 21 in the lateral direction relative to the body. Fig. 8 illustrates the front camera 19, the left camera 20, and the right camera 21 as movable to positions outside the width W1 of the driver's seat 8 in the lateral direction relative to the body. This prevents the front camera 19, the left camera 20, and the right camera 21 from obstructing the driver on the driver's seat 8 in the driver section 3. The front camera 19, the left camera 20, and the right camera 21 each have an adjustable imaging range. The support frame 25 may be slid in the lateral direction relative to the body through a remote operation or a manual operation (that is, as a result of the driver directly moving the support frame 25).

Fig. 9 illustrates the support frame 25 as rotatable in a plan view. Rotating the support frame 25 in a plan view moves the front camera 19, the left camera 20, and the right camera 21 in the front-rear direction relative to the body and the lateral direction relative to the body. This adjusts the respective imaging ranges of the front camera 19, the left camera 20, and the right camera 21. The support frame 25 may be rotated through a remote operation or a manual operation (that is, as a result of the driver directly moving the support frame 25).

The front camera 19, the left camera 20, and the right camera 21 may alternatively be movable in at least one of the vertical direction relative to the body, the lateral direction relative to the body, and the front-rear direction relative to the body. This alternatively embodiment is not limited to the respective configurations illustrated in Figs. 6 to 9. The embodiment described above may be altered such that the front camera 19 alone is movable.

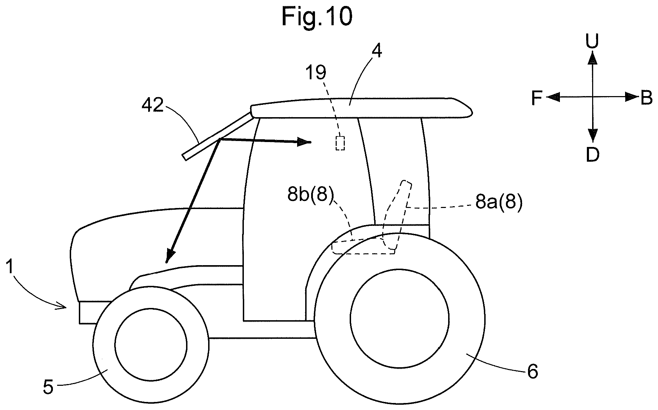

(2) The tractor as the embodiment described above may include a mirror 42 (see Fig. 10) configured to form an image of a front portion of the body 1 and a view rearward of the body 1. As illustrated in Fig. 10, the mirror 42 is outside the cabin 4, specifically, at a front end portion of the roof 10. The mirror 42 has a reflective surface that shows the left and right front wheels 5 and a view rearward of the body 1 and that is within the imaging range of the front camera 19 (see the imaging range R1 of the front camera 19 in Fig. 2). In other words, the front camera 19 is configured to capture images of the left and right front wheels 5 and a view rearward of the body 1 (indirectly with use of the reflective surface of the mirror 42).

The mirror 42 has a reflective surface within the imaging range of at least one of the cameras (namely, the front camera 19, the left camera 20, the right camera 21, the rear camera 22, the left outer camera 23, and the right outer camera 24). This alternatively embodiment is not limited to the configuration illustrated in Fig. 10. The mirror 42 may be inside the cabin 4. The mirror 42 may show not all of the left and right front wheels 5 and a view rearward of the body 1.
(3) The tractor as the embodiment described above includes a front camera 19, a left camera 20, a right camera 21, a rear camera 22, a left outer camera 23, and a right outer camera 24. The tractor may include one or more cameras in addition to the front camera 19, the left camera 20, the right camera 21, the rear camera 22, the left outer camera 23, and the right outer camera 24.
(4) The embodiment described above is configured such that the rear camera 22 is inside the cabin 4. The rear camera 22 may be outside the cabin 4.
(5) The tractor as the embodiment described above includes a rear camera 22. The tractor may omit the rear camera 22.

The tractor may, in this case, include a pair of left and right wide rear-view mirrors 16 for the left camera 20 to capture images of the reflective surface of the left rear-view mirror 16 and for the right camera 21 to capture images of the reflective surface of the right rear-view mirror 16. This allows the left camera 20 and the right camera 21 to capture images of a view rearward of the body 1 (indirectly with use of the respective reflective surfaces of the left and right rear-view mirrors 16). Alternatively, the front camera 19 may be configured to capture images of the respective reflective surfaces of the left and right rear-view mirrors 16 to capture images of a view rearward of the body 1 (indirectly with use of the respective reflective surfaces of the left and right rear-view mirrors 16).
(6) The embodiment described above is configured such that the left outer camera 23 is held by the left rear-view mirror 16. The left outer camera 23 may be held by a component other than the left rear-view mirror 16.
(7) The embodiment described above is configured such that the right outer camera 24 is held by the right rear-view mirror 16. The right outer camera 24 may be held by a component other than the right rear-view mirror 16.
(8) The tractor as the embodiment described above includes a left outer camera 23 and a right outer camera 24. The tractor may omit the left outer camera 23 and the right outer camera 24.

The tractor may, in this case, be configured for the left camera 20 to capture images of the reflective surface of the left rear-view mirror 16 and for the right camera 21 to capture images of the reflective surface of the right rear-view mirror 16. This allows (i) the left camera 20 to capture images of a view rearward of the body 1 and to the left thereof (indirectly with use of the reflective surface of the left rear-view mirror 16) and (ii) the right camera 21 to capture images of a view rearward of the body 1 and to the right thereof (indirectly with use of the reflective surface of the right rear-view mirror 16). Alternatively, the front camera 19 may be configured to capture images of the respective reflective surfaces of the left and right rear-view mirrors 16 to capture images of a view rearward of the body 1 and to the left thereof and of a view rearward of the body 1 and to the right thereof (indirectly with use of the respective reflective surfaces of the left and right rear-view mirrors 16).
(9) The tractor as the embodiment described above includes a steering wheel 9. The tractor may omit the steering wheel 9.
(10) The tractor as the embodiment described above includes a driver's seat 8. The tractor may omit the driver's seat 8.
(11) The tractor as the embodiment described above includes a cabin 4. The tractor may omit the cabin 4.
(12) The tractor as the embodiment described above includes a pair of left and right rear wheels 6. The tractor may include, instead of the left and right rear wheels 6, a pair of left and right crawler travel devices.
(13) The embodiment described above is configured such that the driver's seat 8 includes a backrest 8a. The driver's seat 8 may omit the backrest 8a.
(14) The embodiment described above is configured such that the remote device 26 is for use to operate the body 1. The remote device 26 may be for use to operate the body 1 and the work device 41.
(15) The embodiment described above is configured such that the fifth display section 35 is over a left portion of the first display section 31 and that the sixth display section 36 is over a right portion of the first display section 31. In other words, the respective images captured by the left outer camera 23 and the right outer camera 24 are over the image captured by the front camera 19. The respective images captured by the left outer camera 23 and the right outer camera 24 may be not over the image captured by the front camera 19. In this case, the fifth display section 35 may be under the first display section 31 and to the left of the fourth display section 34, whereas the sixth display section 36 may be under the first display section 31 and to the right of the fourth display section 34.

### Industrial Applicability

The present invention is applicable to tractors as well as rice transplanters.

### Reference Signs List

- 1: Body
- 2: Hood
- 4: Cabin
- 5: Front wheel
- 8: Driver's seat
- 8a: Backrest
- 11: Front pillar
- 12: Rear pillar
- 16: Rear-view mirror (mirror)
- 19: Front camera (camera)
- 20: Left camera (camera, side camera)
- 21: Right camera (camera, side camera)
- 22: Rear camera (camera)
- 23: Left outer camera (camera, outer camera)
- 24: Right outer camera (camera, outer camera)
- 26: Remote device
- 27: Communication device
- 28: Display device
- 30: Control device
- 42: Mirror
- R1: Imaging range of the front camera
- R2: Imaging range of the left camera
- R3: Imaging range of the right camera
- X1: Rotation axis (axle)
- W1: Width of the driver's seat

## Claims

1. An agricultural work vehicle, comprising:
a body with at least one front wheel;
a plurality of cameras; and
a communication device configured to transmit to a remote device an image captured by at least one of the plurality of cameras;
the plurality of cameras including at least one first camera rearward of an axle of the at least one front wheel,
the communication device being configured to transmit to the remote device a first image captured by the at least one first camera.

2. The agricultural work vehicle according to claim 1, wherein
the plurality of cameras include a front camera configured to capture an image of a view forward of the body.

3. The agricultural work vehicle according to claim 2, wherein
the at least one front wheel includes a pair of left and right front wheels, and
the front camera is configured to capture an image of the left and right front wheels.

4. The agricultural work vehicle according to claim 3, further comprising:
a hood at a front portion of the body,
wherein the front camera is configured to capture an image of the hood.

5. The agricultural work vehicle according to any one of claims 2 to 4, wherein
the plurality of cameras include a side camera configured to capture an image of a view lateral to the body.

6. The agricultural work vehicle according to claim 5, further comprising:
a cabin including:
a front pillar; and
a rear pillar,
wherein the front camera and the side camera are between the front pillar and the rear pillar in a front-rear direction relative to the body.

7. The agricultural work vehicle according to any one of claims 2 to 4, further comprising:
a driver's seat,
wherein the front camera is above the driver's seat and is movable in at least one of a vertical direction relative to the body, a lateral direction relative to the body, and a front-rear direction relative to the body.

8. The agricultural work vehicle according to claim 5, further comprising:
a driver's seat,
wherein the front camera and the side camera are above the driver's seat and are movable in at least one of a vertical direction relative to the body, a lateral direction relative to the body, and a front-rear direction relative to the body.

9. The agricultural work vehicle according to any one of claims 2 to 4, further comprising:
a driver's seat,
wherein the front camera is within a width of the driver's seat in a lateral direction relative to the body and is forward of a rear end of the driver's seat.

10. The agricultural work vehicle according to claim 5, wherein
the plurality of cameras include a rear camera configured to capture an image of a view rearward of the body.

11. The agricultural work vehicle according to claim 10, wherein
the plurality of cameras include an outer camera lateral to the body and facing rearward relative to the body.

12. The agricultural work vehicle according to any one of claims 1 to 4, further comprising:
a mirror having a reflective surface within an imaging range of at least one of the plurality of cameras.

13. The agricultural work vehicle according to claim 10, wherein
the front camera, the side camera, and the rear camera each have an imaging direction changeable in response to a remote operation.

14. The agricultural work vehicle according to any one of claims 1 to 4, further comprising:
a cabin containing at least one of the plurality of cameras.

15. The agricultural work vehicle according to any one of claims 1 to 4, wherein
the remote device is for use to operate the body.

16. A control system, comprising:
an agricultural work vehicle according to claim 11,
wherein the remote device includes a display device configured to display the first image captured by the at least one first camera rearward of the axle of the at least one front wheel.

17. The control system according to claim 16, wherein
the communication device is configured to transmit to the remote device respective images captured by the front camera, the side camera, the rear camera, and the outer camera, and
the display device is configured to display the respective images.

18. The control system according to claim 17, wherein
the remote device includes a control device configured to switch an image among the respective images which image is being displayed on the display device to a different image among the respective images which different image is being displayed on the display device.

19. The control system according to claim 18, wherein
the display device is configured to display an image captured by the outer camera over an image captured by the front camera.
